# EUROPÄISCHE PATENTSCHRIFT

(11) **EP 1 296 858 B1**
(45) Veröffentlichungstag und Bekanntmachung des Hinweises auf die Patenterteilung: **28.04.2004**
(21) Anmeldenummer: 01943529.6
(22) Anmeldetag: 21.06.2001
(51) Int. Cl.: B60R 21/26

(54) **KALTGASGENERATOR FÜR EIN AIRBAG-SYSTEM**
COLD GAS GENERATOR FOR AN AIRBAG SYSTEM
GENERATEUR DE GAZ FROID POUR UN SYSTEME D'AIRBAG

(30) Priorität: 29.06.2000 DE 10031750
(43) Veröffentlichungstag der Anmeldung: 02.04.2003
(73) Patentinhaber: Welz Industrieprodukte GmbH, 70736 Fellbach (DE)
(72) Erfinder: WELZ, Siegfried, 70736 Fellbach (DE)
(74) Vertreter: Wasmuth, Rolf, Dipl.-Ing.
(86) Internationale Anmeldenummer: PCT/EP2001/006991
(87) Internationale Veröffentlichungsnummer: WO 2002/000477

(56) Entgegenhaltungen:
- DE-A- 2 324 571
- DE-A- 4 231 522
- DE-A- 19 929 046

## Beschreibung

Die Erfindung betrifft einen Kaltgasgenerator für ein Airbag-System mit den Merkmalen nach dem Oberbegriff des Anspruchs 1. Ein derartiger Kaltgasgenerator ist z.B. aus der DE 4231522 A bekannt.

Bekannte Airbag-Systeme, wie sie im Kraftfahrzeugbau eingesetzt sind und wie sie auch im Schienen- oder Luftfahrzeugbau eingesetzt werden können, bestehen im wesentlichen aus einem im Ruhezustand zusammengefalteten und bedarfsweise mit einem Gas befüllbaren Airbag, aus einem Gasgenerator, der das Befüllungsgas bereitstellt, und aus einer Auslösevorrichtung, die bei einem oberhalb eines definierten Grenzwertes liegenden, unfallbedingten Grenzniveau den Befüllungsvorgang initiiert. Ein sogenannter Kaltgasgenerator weist dabei einen mit einem Gas unter Druck befüllten Speicher und eine Gasauslassöffnung auf, die im Ruhezustand verschlossen und bedarfsweise durch einen öffnungsmechanismus geöffnet werden kann, wodurch der Airbag gefüllt wird.

Steigende Anforderungen bezüglich der Sicherheitstechnik ziehen die Entwicklung zunehmend komplexerer Airbag-Systeme nach sich. Beispielsweise kann zum Schutz gegen einen kombinierten Frontal- und Seitenaufprall die Anordnung je eines vorderen bzw. seitlichen Airbags zweckmäßig sein. Der genannte Seitenairbag kann dabei als ein System von beispielsweise drei einzelnen Airbags ausgebildet sein, wobei jeder Einzelairbag in seiner Beschaffenheit auf die zu schützenden Körperpartien abgestimmt ist. Die dafür erforderliche Vielzahl von Gasgeneratoren ist kostspielig und steht damit einem verbreiteten Einsatz moderner Sicherheitstechnik entgegen. Ein im Bedarfsfalle zeitlich exakt koordiniertes Befüllen der Einzelairbags ist schwierig.

Der Erfindung liegt die Aufgabe zugrunde, einen gattungsgemäßen Kaltgasgenerator derart weiterzubilden, daß ein Einsatz von Airbag-Systemen mit verbesserter Koordination bei verringertem Kostenaufwand ermöglicht ist.

Diese Aufgabe wird durch einen Kaltgasgenerator mit den Merkmalen des Anspruchs 1 gelöst.

Durch Aufteilung des Innenraums des Speichers in mindestens zwei Teilräume und Zuordnung je einer Gasauslassöffnung zu den Teilräumen sind mehrere Airbags aus einem Speicher befüllbar. Durch Anordnung eines öffnungsmechanismus, der gemeinsam die Gasauslassöffnungen betätigt und damit die separaten Airbags befüllt, ist sichergestellt, daß bei einem definierten Auslösesignal alle angeschlossenen Airbags zeitlich aufeinander abgestimmt befüllt werden und dadurch eine abgestimmtes Schutzsystem bieten. Des weiteren ist dadurch erreicht, daß für ein System aus mehreren Airbags nur ein Speicher und nur ein öffnungsmechanismus erforderlich ist, was die Investitionskosten senkt. Gegebenenfalls kann ein entsprechender Speicher mit mehreren Innenräumen serienmäßig in ein Fahrzeug eingebaut werden, wobei nur eine Mindestanzahl von Einzelairbags angeschlossen ist. Bedarfsweise sind mit geringem Zusatzaufwand weitere Airbags nach Kundenwunsch anschließbar, ohne daß der Kaltgasgenerator selbst modifiziert, ausgetauscht oder durch weitere Kaltgasgeneratoren ergänzt werden müßte.

In einer bevorzugten Ausbildung weist der Speicher des Kaltgasgenerators ein zylindrisches, sich entlang einer Längsachse erstreckendes Mittelteil auf, in dem ein längsverschieblicher Kolben gehalten ist. Der Kolben bildet dabei eine Trennwand zur Aufteilung des Innenraumes in zwei Teilräume und hält in seiner Ruheposition eine Gasauslassöffnung von einem der beiden Teilräume verschlossen. Durch diese Anordnung bedingt braucht nur ein einfach gestalteter öffnungsmechanismus vorgesehen sein, der nur auf eine Gasauslassöffnung wirkt. Beim öffnen dieser Gasauslassöffnung sinkt der Gasdruck in einem der Teilräume ab, in dessen Folge der Kolben in Richtung der Längsachse des Speichers verschoben wird und dadurch die weitere Gasauslassöffnung freigibt. Insbesondere bei einer Anordnung mit mehreren Kolben, die jeweils einen Teilraum abtrennen und in ihrer Ruheposition jeweils eine zugeordnete Gasauslassöffnung verschlossen halten, sind mehrere Airbags eines Airbag-Systems auf einfache Weise koordiniert befüllbar, da nur ein einziger öffnungsmechanismus betätigt werden muß. Dabei hat sich eine Verbindung der Kolben untereinander mittels einer Kolbenstange als zweckmäßig herausgestellt, wodurch die Präzision der zeitlichen Abstimmung der einzelnen öffnungsvorgänge aufeinander verbessert ist. Die Kolbenstangen sind dabei bevorzugt rohrförmig ausgebildet, da dadurch eine hohe Knickfestigkeit bei gleichzeitig geringem Gewicht erzielbar ist. Die hohe Knickfestigkeit ist wegen der auftretenden hohen Gasdrücke erforderlich; gleichzeitig ist eine geringe Gesamtmasse der beweglichen Teile wünschenswert, da hohe Auslösegeschwindigkeiten im Bereich von wenigen Millisekunden erforderlich sind.

Ein einfacher und wirkungsvoller öffnungsmechanismus ist durch Anordnung einer eine stirnseitige Gasauslassöffnung verschließenden Dichtscheibe mit einer Sollbruchstelle gegeben, wobei die Dichtscheibe durch ein Stützelement abgestützt ist. Beispielsweise ein pyrotechnischer Aktuator kann im Bedarfsfalle das Stützelement derart seitlich oder drehend versetzen, daß die Dichtscheibe nicht mehr abgestützt ist. Die Sollbruchstelle ist derart dimensioniert, daß sie im nicht abgestützten Zustand der Dichtscheibe durch den anliegenden Gasdruck zerstört wird und die Dichtscheibe die Gasauslassöffnung freigibt. Diese Anordnung braucht zur Betätigung nur eine sehr geringe, im öffnungsmechanismus gespeicherte Energie, die lediglich die Verschiebung des Stützelementes bewirken muß. Die eigentliche Öffnung der verschiedenen Gasauslassöffnungen erfolgt durch die Energie des im Speicher komprimiert bevorrateten Gases. Dabei bewirken die hohen Gasdrücke eine vorteilhaft hohe Beschleunigung des Kolbensystems und damit einhergehend eine schnelle öffnung der verschiedenen Gasauslassöffnungen. Dazu weist die Umfangswand des Speichers zweckmäßig im Bereich ihres stirnseitigen Endes einen sich verjüngenden Querschnitt auf, der auf den sich mit hoher Geschwindigkeit bewegenden Kolben bremsend wirkt und damit mechanische Impulsspitzen während des Auslösevorganges vermeidet.

In einer bevorzugten Ausbildung weisen der oder die Kolben je einen Verbindungskanal zur druckübertragenden Verbindung zweier jeweils an einen Kolben angrenzenden Teilräume auf, wodurch sichergestellt ist, daß im Ruhezustand in allen Teilräumen des Kaltgasgenerators ein gleicher Druck vorherrscht und damit einhergehend das Kolbensystem im Kräftegleichgewicht ist. In den Verbindungskanälen sind je eine Strömungsdrossel angeordnet, wodurch einerseits beim vergleichsweise langsamen Befüllen des Speichers während des Fertigungsprozesses ein Druckausgleich in den einzelnen Teilräumen unter Vermeidung übermäßiger Differenzdrücke stattfinden kann. Im Gegensatz dazu erfolgt die Entleerung des in den einzelnen Teilräumen gespeicherten Gases in die jeweiligen Airbags vergleichsweise sehr schnell. Die Strömungsdrosseln in den Verbindungskanälen vermeiden dabei eine gegenseitige Beeinflussung der separaten Airbags bzw. der zugehörigen Teilräume. Die Kolbenstangen sind zweckmäßig in einem Sackloch im Bereich der Mittelachse der jeweiligen Kolben gehalten, wobei im Boden des Sackloches etwa achsgleich dazu der Verbindungskanal angeordnet ist. Dadurch ist mit einem einzigen automatisierbaren Arbeitsgang sowohl der Verbindungskanal als auch eine Halteaufnahme für die Kolbenstangen zu fertigen, was sowohl die Erstellungskosten gering hält als auch eine mechanische Schwächung der Kolben vermeidet. Insbesondere in Verbindung mit rohrförmigen Kolbenstangen können bei einer derartigen Anordnung diese Kolbenstangen auch als Gasleitung für eine definierte Führung des Gasstromes beim Befüllen vom Befüllungsventil zu den jeweiligen Teilräumen dienen. Des weiteren ist zur Erzielung präzise definierter Strömungsverhältnisse beim Auslösevorgang eine Abdichtung der Kolben insbesondere mittels eines O-Ringes gegen die Umfangswand des Speichers zweckmäßig. Dadurch ist bei einer hinreichenden Dichtigkeit auch eine gute Gleitwirkung zwischen dem Kolben und der Umfangswand gegeben.

Zur Vereinfachung des Aufbaus sind die Gasauslassöffnungen zweckmäßig in der Umfangswand derart angeordnet, daß sie durch den zugehörigen Kolben in seiner Ruheposition überdeckt sind. Dadurch ist mit einfachen Mitteln sowohl ein Dichthalten der Gasauslassöffnungen im Ruhezustand als auch eine Bedarfsweise öffnung derselben erzielbar. Zweckmäßig sind dabei die Gasauslassöffnungen durch jeweils eine Dichthülse verschlossen, wobei die Dichthülse aus einem an der Umfangswand des Speichers befestigten Grundkörper und aus einem kolbenfesten Verschlußkörper bestehen. Der Grundkörper und der Verschlußkörper sind durch eine Sollbruchstelle miteinander verbunden, so daß im Ruhezustand einerseits eine zuverlässige Abdichtung des Speicherinnenraumes und damit einhergehend ein Erhalt des gewünschten Druckniveaus über einen hinreichend langen Zeitraum sichergestellt ist. Andererseits sind die Gasauslassöffnungen zuverlässig und mit geringer Betätigungskraft bedarfsweise zu öffnen, indem der jeweilige Kolben wie oben beschrieben eine Längsbewegung ausführt und dabei den Verschlußkörper an der Sollbruchstelle vom Grundkörper abtrennt. Dazu ist zweckmäßig der Grundkörper als eine Kreisscheibe ausgebildet, an der einteilig ein Zapfen angeformt ist. Der Zapfen greift in eine entsprechende Bohrung im Kolben ein, während die Kreisscheibe an der Umfangswand insbesondere mittels einer Dichtschweißnaht befestigt ist. Achsgleich zur Kreisscheibe und zum Zapfen ist eine Ausströmbohrung vorgesehen, deren Durchmesser geringfügig kleiner ist als der Durchmesser des Zapfens, und deren Tiefe mindestens etwa der Dicke der Kreisscheibe entspricht. Dadurch entsteht im Bereich der Verbindungsstelle zwischen der Kreisscheibe und dem Zapfen ein kurzes dünnwandiges Rohrstück, welches die oben genannte Sollbruchstelle bildet. Beim Abscheren des Zapfens verbleibt eine präzise durch die Ausströmbohrung definierte Gasauslassöffnung; die gewünschte Abscherkraft an der Sollbruchstelle ist durch die Abstimmung des Zapfendurchmessers und des Ausströmbohrungsdurchmessers in einfacher Weise und präzise abstimmbar. Dabei weist der Kolben auf seiner der Ausströmposition abgewandten Seite vorteilhaft eine definierte Überdeckungslänge gegenüber der Ausströmbohrung auf. Die Überdeckungslänge kann bei den einzelnen Kolben unterschiedlich dimensioniert sein, wodurch gegebenenfalls ein zeitlicher Versatz des Beginns des Aufblasvorganges der einzelnen Airbags zueinander steuerbar ist.

Als Füllgas hat sich Helium als vorteilhaft herausgestellt, da dieses Gas eine geringe Abhängigkeit von Druck und Temperatur aufweist. Dadurch kann der Befülldruck des Speichers so gewählt werden, daß einerseits bei tiefen Umgebungstemperaturen eine sichere Befüllung der Airbags ermöglicht ist und andererseits beispielsweise bei intensiver Sonneneinstrahlung der Gasdruck nicht übermäßig ansteigt, womit eine überbeanspruchung des Airbags bei hohen Temperaturen vermieden ist. Des weiteren weist Helium hervorragende Fließeigenschaften auf, die die Anbindung von Airbags über Leitungen entsprechender Länge an den Speicher ermöglicht. Dadurch ist die Positionierung des Speichers beispielsweise an einer geeigneten Stelle im Kraftfahrzeug möglich, die nicht mit dem Ort der Anbringung der Airbags zusammenfällt. Auch ist es möglich, mehrere, an verschiedenen Orten angebrachte Airbags bedarfsweise von einem zentralen Speicher über entsprechende Druckleitungen zu speisen. Des weiteren weist ein mit Helium gefüllter Airbag hervorragende Dämpfungseigenschaften auf, wodurch die Stoßbelastung auf eine zu schützende Person und insbesondere der HIC-Faktor (Head Injury Criterion, Kopfverletzungsfaktor) reduzierbar ist.

Ein Ausführungsbeispiel der Erfindung wird im folgenden anhand der Zeichnung näher beschrieben. Es zeigen:
- Fig. 1: in einer übersichtsdarstellung einen Kaltgasgenerator mit schematisch dargestellten Airbags;
- Fig. 2: eine ausschnittsweise Querschnittsdarstellung des Kaltgasgenerators nach Fig. 1 in Ruheposition;
- Fig. 3: die in Fig. 2 gezeigte Anordnung in Ausströmposition;
- Fig. 4: eine Querschnittsdarstellung des Kaltgasgenerators im Bereich eines Kolbens;
- Fig. 5: einen Längsschnitt durch den in Fig. 4 gezeigten Bereich entlang der Linie V-V.

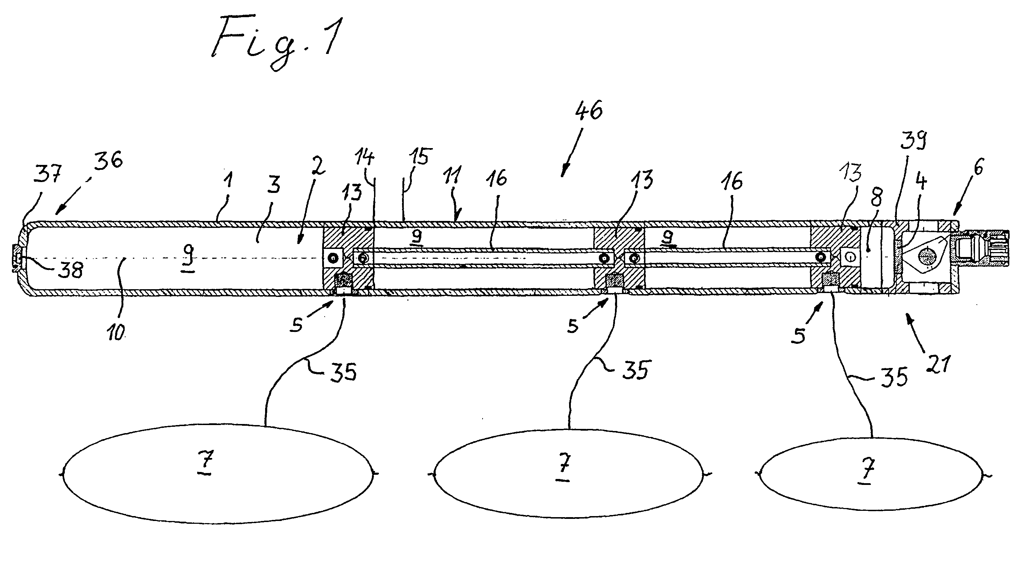

Fig. 1 zeigt in einer schematischen übersichtsdarstellung ein Airbag-System mit drei separaten Airbags 7, die über angedeutete Druckleitungen 35 an einen Kaltgasgenerator 46 angeschlossen sind. Der Kaltgasgenerator 46 umfaßt einen Speicher 1, dessen Innenraum 2 mit einem Gas 3 gefüllt ist, wobei das Gas 3 im gezeigten Ausführungsbeispiel Helium ist. Der Innenraum 2 ist durch drei Kolben 13 im Bereich eines stirnseitigen Endes 21 in einen Teilraum 8 sowie drei übrige Teilräume 9 aufgeteilt. Der stirnseitige Teilraum 8 weist eine verschlossene Gasauslassöffnung 4 auf; den übrigen Teilräumen 9 ist je eine umfangsseitig des Speichers 1 angeordnete Gasauslassöffnung 5 zugeordnet. Im Bereich des stirnseitigen Endes 21 ist ein öffnungsmechanismus 6 vorgesehen, der in einem Auslösergehäuse 39 gehalten ist. Der Speicher 1 weist in seinem Mittelteil 11 eine zylindrische, sich entlang einer Längsachse 10 erstreckende Umfangswand 12 auf, die am stirnseitigen Ende 21 durch das Auslösergehäuse 39 und an dem gegenüberliegenden Ende 36 durch einen Deckel 37 verschlossen ist. Im Deckel 37 ist ein Befüllventil 38 vorgesehen. Die Kolben 13 sind über rohrförmige Kolbenstangen 16 miteinander verbunden und gemeinsam von ihrer gezeigten Ruheposition 14 in eine angedeutete Ausströmposition 15 in Richtung der Längsachse 10 verschieblich.

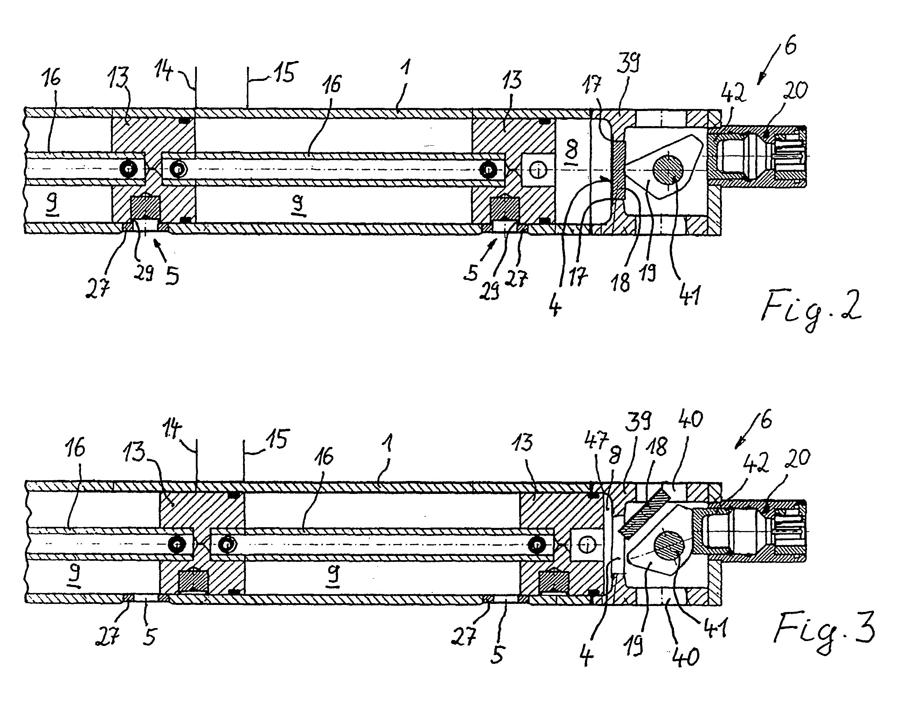

Fig. 2 zeigt in einer vergrößerten Querschnittsdarstellung den Speicher 1 im Bereich des öffnungsmechanismus 6 nach Fig. 1. Der öffnungsmechanismus 6 umfaßt eine Dichtscheibe 18, die mittels einer Sollbruchstelle 17 an das Auslösergehäuse 39 angebunden ist und die stirnseitige Gasauslassöffnung 4 verschließt. Gegen den Gasdruck im stirnseitigen Teilraum 8 ist die Dichtscheibe 18 mittels eines um einen Achsbolzen 41 schwenkbar gelagertes Stützelement 19 abgestützt. Auf der der Dichtscheibe 18 gegenüberliegenden Seite des Stützelementes 19 ist ein pyrotechnischer Aktuator 20 mit einem Schlagkolben 42 angeordnet, der bedarfsweise gegen das Stützelement 19 geschlagen werden kann. Die Teilräume 8, 9 sind mit gleichem Gasdruck befüllt, so daß das System aus dem Kolben 13 und den Kolbenstangen 16 im Kräftegleichgewicht gehalten ist. Es ist auch eine Anordnung möglich, bei der der im Bereich des stirnseitigen Endes 21 liegende Kolben 13 direkt oder mittels einer weiteren Kolbenstange gegen das Stützelement 19 abgestützt ist. Die in ihrer Ruheposition 14 gezeigten Kolben 13 überdecken die umfangsseitigen Gasauslassöffnungen 5, die durch Dichthülsen 27 mit je einer Sollbruchstelle 29 verschlossen sind.

Fig. 3 zeigt die Anordnung nach Fig. 2 im ausgelösten Zustand. Dabei ist durch den pyrotechnischen Aktuator 20 der Schlagkolben 42 gegen das Stützelement 19 gedrückt und die Dichtscheibe 18 durch den Gasdruck im stirnseitigen Teilraum 8 aus der Gasauslassöffnung 4 herausgesprengt. Das zuvor im stirnseitigen Teilraum 8 befindliche Gas kann durch die Gasauslassöffnung 4 sowie zwei weitere Ausströmöffnungen 40 im Auslösergehäuse 39 ins Freie entweichen. Es kann auch eine Anordnung zweckmäßig sein, bei der an die Gasauslassöffnung 4 ein weiterer Airbag 7 (Fig. 1) angeschlossen ist. Durch die öffnung der stirnseitigen Gasauslassöffnung 4 ist das System aus den Kolben 13 und den Kolbenstangen 16 nicht mehr im Kräftegleichgewicht, so daß es durch den anliegenden Gasdruck von der in Fig. 2 gezeigten Ruheposition 14 in die Ausströmposition 15 nach Fig. 3 verschoben ist. Dabei ist die Sollbruchstelle 29 (Fig. 2) der Dichthülsen 27 abgeschert, so daß die umfangseitigen Gasauslass-öffnungen 5 mit den jeweiligen Teilräumen 9 verbunden sind, in dessen Folge die Airbags 7 nach Fig. 1 befüllt werden. Das stirnseitig an die zylindrische Umfangswand 12 angeschweißte Auslösergehäuse 39 weist innenseitig eine Kontur mit einem Radius derart auf, daß sich in diesem Bereich das zylindrische Mittelteil 11 verjüngt. In diesem Bereich ist der an den stirnseitigen Teilraum 8 angrenzende Kolben 13 mit seiner stirnseitigen Kante 47 derart gehalten, daß eine dort auftretende plastische Verformung einen definierten Bremsweg erzeugt. Durch Anpassung der Querschnitte der stirnseitigen Gasauslassöffnung 4 und der Ausströmöffnungen 40 ist die Bewegungsgeschwindigkeit der Kolben 13 gezielt an die Erfordernisse der Airbags 7 (Fig. 1) anpaßbar.

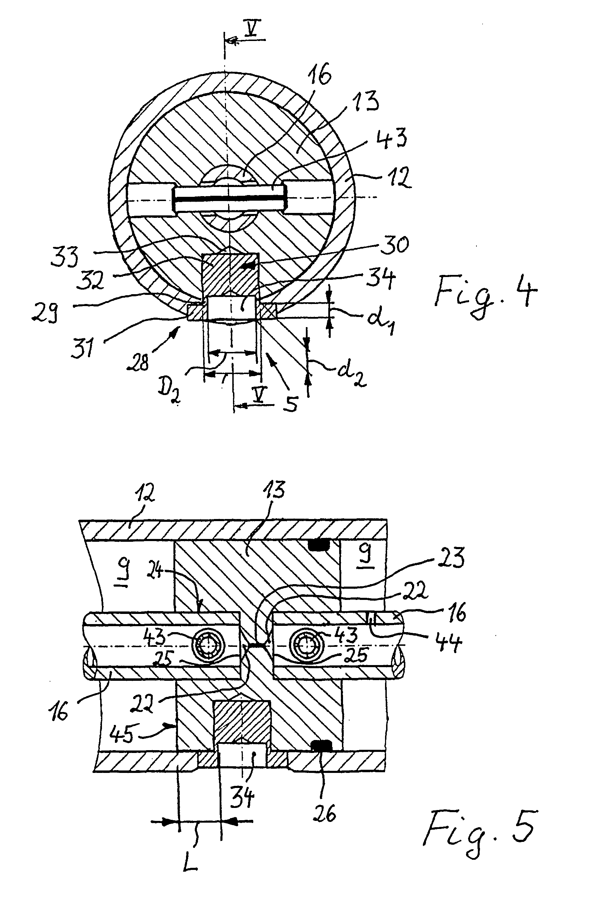

Fig. 4 zeigt einen Querschnitt durch den Kaltgasgenerator 46 nach Fig. 1 im Bereich eines Kolbens 13. Dort ist gezeigt, daß die rohrförmige Kolbenstange 16 mittig im Kolben 13 durch einen Spannstift 43 gehalten ist. In der den Kolben 13 umschließenden Umfangswand 12 ist eine Dichthülse 27 befestigt, die aus einem Grundkörper 28 und einen an den Grundkörper 28 mittels einer Sollbruchstelle 29 angebundenen Verschlußkörper 30 umfaßt. Die Dichthülse 27 verschließt eine Gasauslassöffnung 5. Der Grundkörper 28 ist als Kreisscheibe 31 ausgebildet, die mit einer Dichtschweißnaht an der Umfangswand 12 festgelegt ist. Der Verschlußkörper 30 ist als zylindrischer Zapfen 32 ausgebildet und von einer entsprechenden Bohrung 33 am Kolben 16 umgriffen. In der Kreisscheibe 31 ist achsgleich dazu eine Ausströmbohrung 34 angeordnet, deren Durchmesser D₂ geringfügig kleiner ist als der Durchmesser D₁ des Zapfens 32. Des weiteren weist die Ausströmbohrung 34 eine Tiefe d₂ auf, die etwas größer als die Dicke d₁ der Kreisscheibe 31 ist. Dadurch ist eine ringförmige Sollbruchstelle 29 gebildet.

Fig. 5 zeigt einen Längsschnitt durch den Kaltgasgenerator 46 entlang der in Fig. 4 gezeigten Linie V-V. Der Kolben 13 weist beidseitig je ein Sackloch 24 zur Aufnahme der rohrförmigen Kolbenstangen 16 auf. Im Boden 25 der Sacklöcher 24 ist ein Verbindungskanal 22 mit einer darin angeordneten Strömungsdrossel 23 vorgesehen. Die rohrförmigen Kolbenstangen wirken dabei als Gasleitung, wobei durch Druckausgleichsbohrungen 44 in den Kolbenstangen 16 eine Verbindung der beiden angrenzenden Teilräume 9 gegeben ist. Zur druckübertragenden Verbindung der beiden Teilräume 9 kann ggf. auch eine definierte Undichtigkeit zwischen den Kolbenstangen 16 und den sie haltenden Sacklöchern 24 bzw. im Bereich der Spannstifte 43 ausreichen. Der Kolben 13 ist durch einen umlaufenden O-Ring 26 gegen die zylindrische Umfangswand 12 abgedichtet und weist gegenüber der Ausströmbohrung 24 auf seiner der Ausströmposition 15 (Fig. 1-Fig. 3) abgewandten Seite 45 eine überlappungslänge L auf. Durch Anpassung der Überlappungslänge L an die Ausströmbohrung 34 ist ein definierter Auslöse- und Befüllvorgang des angeschlossenen Airbags 7 (Fig. 1) erzielbar.

## Patentansprüche

1. Kaltgasgenerator für ein Airbag-System, mit einem Speicher (1), dessen Innenraum (2) mit einem Gas (3) unter Druck befüllt ist, mit einer im Ruhezustand verschlossenen Gasauslassöffnung (4, 5) und mit einem öffnungsmechanismus (6) zur bedarfsweisen öffnung der Gasauslassöffnung (4, 5) und Befüllen eines Airbags (7) mit dem Gas (3),
**dadurch gekennzeichnet, daß** der Innenraum (2) in mindestens zwei Teilräume (8, 9) aufgeteilt ist, wobei den Teilräumen (8, 9) je eine Gasauslassöffnung (4, 5) zur Befüllung mehrerer separater Airbags (7) zugeordnet ist und wobei die Gasauslassöffnungen (4, 5) gemeinsam durch den öffnungsmechanismus (6) betätigbar sind.

2. Kaltgasgenerator nach Anspruch 1,
**dadurch gekennzeichnet, daß** der Speicher (1) ein etwa zylindrisches, sich entlang einer Längsachse (10) erstreckendes Mittelteil (11) mit einer zylindrischen Umfangswand (12) umfaßt, wobei im Innenraum (2) im Bereich des Mittelteils (11) ein Kolben (13) vorgesehen ist, der durch Betätigung des öffnungsmechanismus (6) von einer Ruheposition (14) in Richtung der Längsachse (10) in eine Ausströmposition (15) verschieblich ist, und wobei in der Ruheposition (14) des Kolbens (13) eine Gasauslassöffnung (5) verschlossen und in seiner Ausströmposition (15) geöffnet ist.

3. Kaltgasgenerator nach Anspruch 2,
**dadurch gekennzeichnet, daß** mehrere Kolben (13) zur Abtrennung je eines Teilraumes (9) vorgesehen sind, in deren Bereich je eine Gasauslassöffnung (5) zum Befüllen je eines Airbags (7) angeordnet ist.

4. Kaltgasgenerator nach Anspruch 3,
**dadurch gekennzeichnet, daß** die Kolben (13) durch eine Kolbenstange (16) miteinander verbunden sind.

5. Kaltgasgenerator nach Anspruch 4,
**dadurch gekennzeichnet, daß** die Kolbenstange (16) rohrförmig ausgebildet ist.

6. Kaltgasgenerator nach einem der Ansprüche 2 bis 5,
**dadurch gekennzeichnet, daß** die Kolben (13) in ihrer Ruheposition (14) durch den anliegenden Gasdruck im Gleichgewicht gehalten sind, und daß der öffnungsmechanismus (6) auf die Gasauslassöffnung (4) des im Bereich eines stirnseitigen Endes (21) des Speichers (1) angeordneten Teilraumes (8) wirkt.

7. Kaltgasgenerator nach Anspruch 6,
**dadurch gekennzeichnet, daß** der öffnungsmechanismus (6) eine mit einer Sollbruchstelle (17) versehene, die Gasauslassöffnung (4) verschließende Dichtscheibe (18), ein die Dichtscheibe (18) abstützendes Stützelement (19) und einen auf das Stützelement (19) wirkenden pyrotechnischen Aktuator (20) umfaßt.

8. Kaltgasgenerator nach Anspruch 6 oder Anspruch 7,
**dadurch gekennzeichnet, daß** die Umfangswand (12) im Bereich ihres stirnseitigen Endes (21) einen sich verjüngenden Querschnitt aufweist.

9. Kaltgasgenerator nach einem der Ansprüche 6 bis 8,
**dadurch gekennzeichnet, daß** in den Kolben (13) je ein Verbindungskanal (22) zur druckübertragenden Verbindung zweier jeweils an einem Kolben (13) angrenzender Teilräume (8, 9) vorgesehen ist, wobei in den Verbindungskanälen (22) je eine Strömungsdrossel (23) angeordnet ist.

10. Kaltgasgenerator nach einem der Ansprüche 4 bis 9,
**dadurch gekennzeichnet, daß** die Kolben (13) ein Sackloch (24) zur Aufnahme der Kolbenstange (16) aufweisen und daß im Boden (25) des Sackloches (24) etwa achsgleich dazu der Verbindungskanal (22) angeordnet ist.

11. Kaltgasgenerator nach einem der Ansprüche 2 bis 10,
**dadurch gekennzeichnet, daß** die Kolben (13) insbesondere mittels eines O-Ringes (26) gegen die Umfangswand (12) abgedichtet sind.

12. Kaltgasgenerator nach einem der Ansprüche 2 bis 11,
**dadurch gekennzeichnet, daß** die Gasauslassöffnung (5) in der Umfangswand (12) angeordnet und durch den zugehörigen Kolben (13) in seiner Ruheposition (14) überdeckt ist.

13. Kaltgasgenerator nach Anspruch 12,
**dadurch gekennzeichnet, daß** die Gasauslassöffnung (5) in der Ruheposition (14) des Kolbens (13) durch eine Dichthülse (27) verschlossen ist, wobei die Dichthülse (27) aus einem an der Umfangswand (12) befestigten Grundkörper (28) und aus einem an dem Grundkörper (28) mittels einer Sollbruchstelle (29) angebundenen, kolbenfesten Verschlußkörper (30) besteht.

14. Kaltgasgenerator nach Anspruch 13,
**dadurch gekennzeichnet, daß** der Grundkörper (28) etwa die Form einer Kreisscheibe (31) mit einer Dicke (d₁) aufweist, daß der Verschlußkörper (30) ein einteilig und achsgleich an die Kreisscheibe (31) angeformter zylindrischer Zapfen mit einem Durchmesser (D₁) ist, der in eine entsprechende Bohrung (33) im Kolben (13) eingreift, und daß in der Kreisscheibe (31) eine im wesentlichen achsgleiche Ausströmbohrung (34) vorgesehen ist, deren Durchmesser (D₂) geringfügig kleiner als der Durchmesser (D₁) des Zapfens (32) ist und deren Tiefe (d₂) mindestens der Dicke (d₁) der Kreisscheibe (31) entspricht.

15. Kaltgasgenerator nach einem der Ansprüche 12 bis 14,
**dadurch gekennzeichnet, daß** sich der Kolben (13) auf seiner der Ausströmposition (15) abgewandten Seite (45) mit einer Überdeckungslänge (L) gegenüber der Ausströmbohrung erstreckt.

16. Kaltgasgenerator nach einem der Ansprüche 1 bis 15,
**dadurch gekennzeichnet, daß** das in den Innenraum (2) eingefüllte Gas (3) hauptsächlich Helium ist.

## Claims

1. Cold gas generator for an airbag system with a storage device (1) whose inner area (3) is filled with a gas (3) under pressure, with a gas outlet opening (4,5) closed in the state of rest and with an opening mechanism (6) for the opening as required of the gas outlet opening (4, 5) and filling of an airbag (7) with the gas (3)
**characterised in that** the inner area (2) is divided into at least two part areas (8, 9) wherein a gas outlet opening (4, 5) for the filling of several separate airbags (7) is assigned to each part area (8, 9) and wherein the gas outlet openings (4, 5) can be activated in common by the opening mechanism (6).

2. Cold gas generator according to claim 1
**characterised in that** the storage device has an approximately cylindrical middle part (11) extending along a longitudinal axis (10) with a cylindrical perimeter wall (12) wherein in the inner area (2) in the region of the middle part (11) a piston (13) is provided which through activation of the opening mechanism (6) can be displaced from a position of rest (14) in the direction of the longitudinal axis (10 into an exhaust position (15) and wherein in the position of rest (14) of the piston (13) a gas outlet opening (5) is closed and in its exhaust position (15) is opened.

3. Cold generator according to claim 2
**characterised in that** several pistons (13) are provided for the separation of each part area (9), in the region of each of which a gas outlet opening (5) is arranged for the filling of each airbag (7).

4. Cold generator according to claim 3
**characterised in that** the pistons (13) are connected with each other by a piston rod (16).

5. Cold gas generator according to claim 4
**characterised in that** the piston rod (16) is formed as a pipe.

6. Cold gas generator according to one of the claims 2 to 5 **characterised in that** the pistons (13) are held in their position of rest (14) through the gas pressure in equilibrium and that the opening mechanism (6) acts upon the gas outlet opening (4) of the part area (8) arranged in the region of a front end (21) of the storage device (1).

7. Cold gas generator according to claim 6
**characterised in that** the opening mechanism (6) has a gasket (18) closing the gas outlet opening (4) provided with a reference break point (17), a support element (19) supporting the gasket (18) and a pyrotechnical actuator (20) acting upon the support element (19).

8. Cold gas generator according to claim 6 or 7
**characterised in that** the perimeter wall (12) has a tapered cross-section in the region of its front end (21).

9. Cold gas generator according to one of the claims 6 to 8 **characterised in that** in each piston (13) a connection channel (22) for the pressure-transferring connection of two part areas (8, 9) respectively bordering on a piston (13) is provided wherein in each connection channel (22) a flow restrictor (23) is arranged.

10. Cold gas generator according to one of the claims 4 to 9 **characterised in that** the pistons (13) have a blind hole (24) for the mounting of the piston rod (16) and that in the bottom (25) of the blind hole (24) with approximately equal axis thereto the connection channel (22) is arranged.

11. Cold gas generator according to one of the claims 2 to 10 **characterised in that** the pistons (13) are sealed in particular by means of an O ring (26) against the perimeter wall (12).

12. Cold gas generator according to one of the claims 2 to 11 **characterised in that** the gas outlet opening (5) is arranged in the perimeter wall (12) and covered in its position of rest (14) through the associated piston (13).

13. Cold gas generator according to claim 12 **characterised in that** the gas outlet opening (5) is closed in the position of rest (14) of the piston (13) through a sealing sleeve (27) wherein the sealing sleeve (27) consists of a basic body (28) fixed to the perimeter wall and a piston-fixed closing body (30) connected by means of a reference break point (29) to the basic body (28).

14. Cold gas generator according to claim 13
**characterised in that** the basic body (28) has approximately the form of a circular disc (31) with a thickness (d₁), that the closing body (3) is a cylindrical neck formed as one component and with equal axis on the circular disc (31) with a diameter (D₁) which engages in a corresponding bore (33) in the piston (13) and that in the circular disc (31) an essentially equal-axis exhaust bore (34) is provided whose diameter (D₂) is negligibly smaller than the diameter (D₁) of the neck (32) and whose depth (d₂) corresponds at least to the thickness (d₁) of the circular disc (31).

15. Cold gas generator according to one of the claims 12 to 14 **characterised in that** the piston (13) extends on its side (45) facing away from the exhaust position (15) with a coverage length (L) in relation to the exhaust bore.

16. Cold gas generator according to one of the claims 1 to 15 **characterised in that** the gas (3) filled into the inner area (2) is mainly helium.

## Revendications

1. Générateur de gaz froid pour un système d'airbag comprenant un réservoir (1), dont l'espace intérieur (2) est rempli avec un gaz (3) sous pression, une ouverture pour l'évacuation du gaz (4, 5) fermée au repos et un mécanisme d'ouverture (6) pour ouvrir, en cas de besoin, l'ouverture pour l'évacuation du gaz (4, 5) et remplir un airbag (7) avec le gaz (3), **caractérisé en ce que** l'espace intérieur (2) est divisé en au moins deux espaces secondaires (8, 9), une ouverture pour l'évacuation du gaz (4, 5) pour remplir plusieurs airbags séparés (7) étant affectée à chacun des espaces secondaires (8, 9) et les ouvertures pour l'évacuation du gaz (4, 5) pouvant être actionnées conjointement par le mécanisme d'ouverture.

2. Générateur de gaz froid selon la revendication 1, **caractérisé en ce que** le réservoir (1) comprend une partie centrale (11) cylindrique s'étendant le long d'un axe vertical (10) avec une paroi circonférentielle cylindrique (12), un piston (13) étant prévu dans l'espace intérieur (2) dans la zone de la partie centrale (11), lequel est mobile grâce à l'action du mécanisme d'ouverture (6) d'une position de repos (14), dans le sens de l'axe vertical (10), dans une position d'évacuation (15), et sachant que, dans la position de repos (14) du piston (13), une ouverture pour l'évacuation du gaz (5) est fermée et ouverte dans sa position d'évacuation (15).

3. Générateur de gaz froid selon la revendication 2, **caractérisé en ce que** plusieurs pistons (13) sont prévus pour séparer chaque espace secondaire (9), dans la zone desquels une ouverture pour l'évacuation du gaz (5) est prévue pour remplir un airbag (7).

4. Générateur de gaz froid selon la revendication 3, **caractérisé en ce que** les pistons (13) sont reliés les uns aux autres par une tige de piston (16).

5. Générateur de gaz froid selon la revendication 4, **caractérisé en ce que** la tige de piston (16) est formée de façon tubulaire.

6. Générateur de gaz froid selon l'une quelconque des revendications 2 à 5, **caractérisé en ce que** les pistons (13) sont maintenus dans leur position de repos (14) par la pression du gaz se trouvant en équilibre, et **en ce que** le mécanisme d'ouverture (6) agit sur l'ouverture pour l'évacuation du gaz (4) de l'espace secondaire (8) disposé dans la zone d'une extrémité avant (21) du réservoir (1).

7. Générateur de gaz froid selon la revendication 6, **caractérisé en ce que** le mécanisme d'ouverture (6) comprend un disque étanche (18) renfermant l'ouverture pour l'évacuation du gaz (4) prévu avec un point destiné à la rupture (17), un élément de support (19) soutenant le disque étanche (18) et un actionneur pyrotechnique (20) agissant sur l'élément de support (19).

8. Générateur de gaz froid selon la revendication 6 ou la revendication 7, **caractérisé en ce que** la paroi circonférentielle (12) présente une coupe transversale s'affinant dans la zone de son extrémité avant (21).

9. Générateur de gaz froid selon l'une quelconque des revendications 6 à 8, **caractérisé en ce qu'**un canal de connexion (22) est prévu dans les pistons (13) pour relier par un échange de pression deux espaces secondaires (8, 9) adjacents respectivement au niveau d'un piston (13), sachant qu'un restricteur d'écoulement (23) est disposé dans les canaux de connexion (22).

10. Générateur de gaz froid selon l'une quelconque des revendications 4 à 9, **caractérisé en ce que** les pistons (13) présentent un trou borgne (24) pour recevoir la tige de piston (16) et **en ce que**, dans le fond (25) du trou borgne (24), le canal de connexion (22) est disposé comme un axe.

11. Générateur de gaz froid selon l'une quelconque des revendications 2 à 10, **caractérisé en ce que** les pistons (13) sont rendus étanches plus particulièrement au moyen d'un joint torique (26) contre la paroi circonférentielle (12).

12. Générateur de gaz froid selon l'une quelconque des revendications 2 à 11, **caractérisé en ce que** l'ouverture pour l'évacuation du gaz (5) est disposée dans la paroi circonférentielle (12) et est recouverte par le piston (13) correspondant en position de repos (14).

13. Générateur de gaz froid selon la revendication 12, **caractérisé en ce que** l'ouverture pour l'évacuation du gaz (5) lorsque le piston (13) est en position de repos (14) est fermée par une douille d'étanchéité (27), la douille d'étanchéité (27) se composant d'un élément de base (28) fixé à la paroi circonférentielle (12) et d'un élément de fermeture (30) fixé par piston et relié à l'élément de base (28) au moyen d'un point destiné à la rupture (29).

14. Générateur de gaz froid selon la revendication 13, **caractérisé en ce que** l'élément de base (28) présente la forme d'un disque circulaire (31) avec une épaisseur (d₁), **en ce que** l'élément de fermeture (30) est un tourillon cylindrique formé en un seul bloc et comme un axe au niveau du disque circulaire (31) avec un diamètre (D1), qui emboîte le diamètre de perçage (33) correspondant dans le piston (13), et **en ce qu'**un diamètre de perçage d'évacuation (34) essentiellement comme un axe est prévu dans le disque circulaire (31), dont le diamètre (D2) est légèrement inférieur au diamètre (D1) du tourillon (32) et dont la profondeur (d2) correspond au moins à l'épaisseur (d1) du disque circulaire (31).

15. Générateur de gaz froid selon l'une quelconque des revendications 12 à 14, **caractérisé en ce que** le piston (13) s'étend du côté opposé (45) à la position d'évacuation (15) avec une longueur de couverture (L) par rapport au diamètre de perçage d'évacuation.

16. Générateur de gaz froid selon l'une quelconque des revendications 1 à 15, **caractérisé en ce que** le gaz (3) rempli dans l'espace intérieur (2) est principalement de l'hélium.
